# EUROPÄISCHE PATENTSCHRIFT

(11) **EP 2 813 475 B1**
(45) Veröffentlichungstag und Bekanntmachung des Hinweises auf die Patenterteilung: **10.08.2016**
(21) Anmeldenummer: 13171997.3
(22) Anmeldetag: 14.06.2013
(51) Int. Cl.: C02F 9/00, C02F 1/42, C02F 1/44, C02F 1/52, C02F 1/56, C02F 101/10, C02F 101/20, C02F 103/18

(54) **VERFAHREN ZUM ENTFERNEN VON QUECKSILBER UND SELEN AUS SULFATHALTIGEM ABWASSER**
METHOD FOR THE REMOVAL OF MERCURY AND SELENIUM FROM WASTEWATER CONTAINING SULFATES
PROCEDE D'ELIMINATION DE MERCURE ET DE SELENIUM DANS DES EAUX USEES CONTENANT DES SULFATES

(43) Veröffentlichungstag der Anmeldung: 17.12.2014
(73) Patentinhaber: STEAG Energy Services GmbH, 45128 Essen (DE)
(72) Erfinder: Piedra-Garza Luis Fernando, 45133 Essen (DE); Lauer Thomas, 45130 Essen (DE); Hilger Magdalena, 51105 Köln (DE)
(74) Vertreter: Zenz Patentanwälte Partnerschaft mbB

(56) Entgegenhaltungen:
- EP-A2- 0 205 976
- WO-A1-00/76917
- DE-A1- 2 025 389
- DE-A1- 4 333 739
- GB-A- 2 098 186
- JP-A- 2010 088 991
- US-A1- 2010 300 977
- Thomas E. Higgins ET AL: "Flue Gas Desulfurization Wastewater Treatment Primer", Power mag, 3 January 2009 (2009-01-03), XP055135437, Retrieved from the Internet: URL:http://www.powermag.com/flue-gas-desul furization-wastewater-treatment-primer/?pr intmode=1 [retrieved on 2014-08-20]
- "TRACE MERCURY REMOVAL FROM FLUE GAS DESULFURIZATION WASTEWATER", IP.COM JOURNAL, IP.COM INC., WEST HENRIETTA, NY, US, 21 December 2009 (2009-12-21), XP013136054, ISSN: 1533-0001

## Beschreibung

Die vorliegende Erfindung betrifft ein Verfahren zum Entfernen von Verunreinigungen aus Abwasser, und insbesondere ein Verfahren zum Entfernen von Quecksilber und Selen aus sulfathaltigem Abwasser.

Abwässer aus Industrieanlagen enthalten eine Vielzahl von Schadstoffen, die vor einer Abgabe der Abwässer an die Umwelt entfernt werden müssen. Eine besonders giftige, in Abwässern von Industrieanlagen enthaltene Verunreinigung ist das Übergangsmetall Quecksilber. Dieses wird beispielsweise bei Rauchgasentschwefelungsanlagen, wie sie bei jedem modernen Kraftwerk, das fossile Brennstoffe verfeuert, üblich sind, aus den Verbrennungsabgasen gewaschen und gelangt so in das Abwasser der Rauchgasentschwefelungsanlage.

Selen ist ein essentielles Spurenelement, wirkt jedoch in höheren Konzentrationen stark toxisch, so dass es die Anstrengung gibt, auch Selen aus Abwässern von Industrieanlagen zu entfernen.

In Deutschland beispielsweise wird durch die Abwasserverordnung Anhang 47 "Wäsche von Rauchgasen aus Feuerungsanlagen" der Grenzwert für Quecksilber im Abwasser von Rauchgasentschwefelungsanlagen festgelegt. In der aktuellen Fassung vom 14. Juni 2004 beträgt der Grenzwert für Quecksilber 30µg/l. Für Selen sieht die vorgenannte Verordnung in der vorliegenden Fassung noch keinen Grenzwert vor.

In den Vereinigten Staaten von Amerika gibt es bereits jetzt Anstrengungen, die Grenzwerte für Quecksilber und Selen in Abwässern von Industrieanlagen, und insbesondere konventionellen Kraftwerken, zu senken. In zahlreichen Fällen wurden diese Grenzwerte bereits auf <12 ppt (ng/l) für Quecksilber und <6 ppb (µg/l) für Selen festgelegt.

Das Entfernen von Quecksilber aus der Rauchgaswäsche ist aus der DE 43 33 739 A1 bekannt, das Entfernen von Selen aus einer Flüssigkeit aus der US 2010/0300977. Aus der EP 0 205 976 ist ein Verfahren zum Entfernen von Schwefeloxiden aus Fluiden bekannt.

Higgins et al. (siehe www.powermag.com/category/ environmental) offenbart ein Verfahren zum Entfernen von Quecksilber und Selen aus Abwasser von Rauchgasentschwefelungsanlage mittels Calciumsulfat und TMT-15 (ein Organosulfid).

Es ist Aufgabe der vorliegenden Erfindung, ein großtechnisch kostengünstig durchführbares Verfahren zum Entfernen von Quecksilber und Selen aus sulfathaltigem Abwasser bereitzustellen.

Die Aufgabe wird erfindungsgemäß gelöst durch ein Verfahren, bei welchem a) ein mit Quecksilber und Selen verunreinigtes Abwasservolumen V1 mit bekannter Sulfatkonzentration bereitgestellt wird, b) BaSO₄ aus dem bereitgestellten Abwasservolumen ausgefällt wird, wozu eine definierte Menge Ba²⁺-Ionen in das Abwasservolumen V1 gegeben wird, c) das entstandene BaSO₄ (ggf. zusammen mit anderen entstandenen oder vorhandenen Feststoffen) abgetrennt wird, wobei ein feststoffarmes Abwasser erhalten wird, d) das feststoffarme Abwasser zum Entfernen von Quecksilber über ein Ionenaustauscher geführt wird, wobei eine Lösung mit vermindertem Quecksilbergehalt erhalten wird, und e) Selen und/oder. Selenverbindungen aus der Lösung mit vermindertem Quecksilbergehalt entfernt werden.

Überraschender Weise wurde festgestellt, dass mit dem erfindungsgemäßen Verfahren Quecksilber und Selen kostengünstig und anlagentechnisch einfach sehr effizient aus sulfatbelastetem Abwasser entfernt werden kann. Aufgrund der erfindungsgemäßen Abfolge der Verfahrensschritte ergibt sich der Effekt, dass sowohl Quecksilber als auch Selen unter Einhaltung sehr strenger Grenzwerte kostengünstig und ohne hohen anlagentechnischen Aufwand aus einem sulfatbelasteten Abwasser entfernbar sind.

Dazu wird in einer ersten Verfahrensstufe (Sulfatfällungsstufe) die Sulfatkonzentration des Abwassers durch Ausfällen von Bariumsulfat wesentlich vermindert, wobei erst durch die Verminderung der Sulfatkonzentration die nachfolgende Entfernung von Quecksilber (Quecksilberstufe) und Selen (Selenstufe) überhaupt möglich wird.

Zur Ausfällung von Bariumsulfat wird ein bestimmtes Abwasservolumen V1, dessen Sulfatkonzentration bekannt ist, mit einer definierten Menge Ba²⁺-Ionen versetzt (beispielsweise einer Ba²⁺-haltigen Lösung mit bekannter Ba²⁺-Konzentration oder einem Ba²⁺-Ionen aufweisenden wasserlöslichen Feststoff) versetzt, so dass BaSO₄, das ein sehr geringes Löslichkeitsprodukt von 1,08 * 10⁻¹⁰ mol²/l² hat, aus der Lösung ausfällt. Da die Konzentration des Sulfats als auch die Konzentration/Menge der Ba²⁺-haltigen Lösung bzw. des Feststoffs bekannt sind, kann diese Verfahrensstufe derart durchgeführt werden, dass genau stöchiometrische Mengen Barium dem Abwasser zugeführt werden. Ist die Sulfatkonzentration nicht bekannt oder schwankt stark, so wird diese vor dem Verfahrensschritt a) für das bzw. jedes Volumen V1 bestimmt.

Es ist jedoch auch denkbar, überstöchiometrische Mengen Barium zuzugeben, wobei dies zur Folge hat, dass in dem Abwasser enthaltenes Selenat als Bariumselenat ausgefällt wird, wobei dieses aufgrund des höheren Löslichkeitsproduktes erst bei einer erhöhten Bariumkonzentration in dem Abwasser ausfällt.

Mit Hilfe der Ausfällung des Sulfats als BaSO₄ kann die Sulfatkonzentration in dem Abwasser auf <50 mg/l vermindert werden.

Zum Ausfällen des Bariumsulfates kann die definierte Menge Ba²⁺-Ionen (beispielsweise eine vorgegebene Menge Ba²⁺-haltige Lösung mit bekannter Ba²⁺-Konzentration), die die stöchiometrisch notwendige Menge Barium (oder eine geringfügig überstöchiometrische Menge) zum Ausfällen des gesamten Bariums aus dem Volumen V1 enthält, dem Abwasservolumen V1 ohne Verzögerung bei einer bestimmten Stelle der Verfahrensstrecke zugegeben werden. D.h. es kann bei einer Stelle und in einem Verfahrensschritt das gesamte zum Ausfällen des Sulfates im Abwasser notwendige Barium zugegeben werden.

Es hat sich allerdings herausgestellt, dass die vorgenannte Vorgehensweise zum Ausfällen des Sulfates nicht die effizienteste ist.

Generell kann das Abtrennen des Sulfats "semikontinuierlich" oder "kontinuierlich" durchgeführt werden.

Semikontinuierlich, indem in einem ersten Reaktionsbehältnis das Abwasservolumen V1 vorgelegt wird und die gewünschte Menge Ba²⁺-Ionen zugeführt wird. Nach erfolgter Ausfällung des Bariumsulfats (und ggf. weiterer Feststoffe) wird dieses ggf. mit anderen Feststoffen abgetrennt und das feststoffarme Abwasser der Quecksilberentfernung zugeführt.

Kontinuierlich kann eine solche Sulfatabtrennung erfolgen, indem bei einer bestimmten Position in beispielsweise einem Durchflussreaktor eine definierte Menge Ba²⁺-Ionen zugegeben wird und der bei Zugabe der Ba²⁺-Ionen entstehende Feststoff bei einer zweiten Stelle stromab der Zugabestelle abgetrennt wird.

Es wurde nun überraschenderweise festgestellt, dass die Abscheidung des Bariumsulfats verbessert werden kann, indem bei der semikontinuierlichen Verfahrensführung die Ba²⁺-Ionen (in Lösung oder als Feststoff) über einen Zeitraum t oder, bei dem kontinuierlichen Verfahren, über eine Verfahrensstrecke x in n Teilen zu n unterschiedlichen Zeitpunkten oder an n unterschiedlichen Verfahrensstreckenposition zugeführt wird, wobei t, x und n vom zu behandelnden Abwasservolumenstrom pro Zeiteinheit und dessen Sulfatgehalt abhängig sind.

Durch diese Art der Zugabe der Ba²⁺-Ionen ist zu Beginn der Zugabe sichergestellt, dass eine unterstöchiometrische Menge Ba²⁺ zur Ausfällung des Bariumsulfates an einer gegebenen Verfahrensstreckenposition oder einem gegebenen Zeitpunkt vorliegt. Lediglich bei der Zugabe des letzten oder einem der letzten der n Teile nähert sich die Ba²⁺-Konzentration der des Sulfates in dem Abwasser an. Wird überstöchiometrisch in Bezug auf Ba²⁺ gearbeitet, um bereits einen Teil des Selens in dem Abwasser als Bariumselenat auszufällen, überschreitet bei einem (wahrscheinlich dem) letzten der n Teile die Ba²⁺-Konzentration die Konzentration des Sulfates zu dem jeweiligen Zeitpunkt bzw. an der jeweiligen Verfahrensstreckenposition.

Werden die Ba²⁺-Ionen in einem Teil zu einem Zeitpunkt oder bei einer Verfahrensstreckenposition zugegeben, wird das entstehende Bariumsulfat (sowie gegebenenfalls andere entstehende Feststoffe wie Bariumselenat bei überstöchiometrischer Zugabe von Barium) in einem einzigen Verfahrensschritt abgetrennt.

Dabei ist es, bedingt durch gewisse Schwankungen in der Sulfatkonzentration des Abwassers, nicht ausgeschlossen, das durch eine mögliche Überkonzentrierung der Ba²⁺-Ionen Bariumselenat in dem abgetrennten Feststoff vorhanden ist, wodurch das Bariumsulfat verunreinigt wird und eine weitere Verwendung des Bariumsulfates erschwert ist.

Bei einer bevorzugten Ausführungsform des erfindungsgemäßen Verfahrens ist es daher vorgesehen, dass das Bariumsulfat nach Zuführung von 1 bis n Teilen der definierten Menge Ba²⁺-Ionen abgetrennt wird, d. h. es ist auch vorgesehen, das Bariumsulfat nach Zugabe von beispielsweise jedem oder jedem zweiten Teil abzutrennen.

Zu Beginn der Zugabe der definierten Menge Ba²⁺-Ionen ist es somit aufgrund der Differenzen der Löslichkeitsprodukte von Bariumsulfat und Bariumselenat sichergestellt, dass hochreines Bariumsulfat ohne Bariumselenat-Verunreinigungen abgetrennt wird, welches ohne aufwändige Reinigung weiterverwendet werden kann. Lediglich bei der letzten Abtrennung (oder einer der letzten Abtrennungen) ist bei einer Überkonzentrierung der Ba²⁺-Ionen damit zu rechnen, dass Spuren von Bariumselenat in dem abgetrennten Feststoff vorhanden sind.

Um das Ausfällen des Bariumsulfates zu begünstigen, ist es bei einer bevorzugten Ausführungsform des erfindungsgemäßen Verfahrens vorgesehen, dass nach Zugabe der definierten Menge Ba²⁺-Ionen oder beliebiger Teile n dieser Menge ein pH-Wert grösser 9,5, bevorzugt zwischen 11 und 12,5, mit Hydroxidionen oder Hydroxidionen ausbildenden Verbindungen eingestellt wird. Dazu kann beispielsweise eine hydroxidhaltige wässrige Lösung, ein festes Hydroxid oder ein Hydroxidionen ausbildender Feststoff wie CaO verwendet werden.

Vorzugsweise wird der pH-Wert durch Zugabe einer geeigneten hydroxidhaltigen Lösung der ersten und/oder zweiten Hauptgruppe des Periodensystems eingestellt wird. Einige der Hydroxide der ersten und zweiten Hauptgruppe sind technisch schwer einsetzbar oder zu schwache Basen, um den gewünschten pH-Bereich zu erreichen (Hydroxide von Be und Mg).

Insbesondere die Größe der Flocken einer auszufällenden Verbindung beeinflusst deren Abtrennverhalten; große Flocken lassen sich im Allgemeinen besser abtrennen als kleine Flocken. Bei einer bevorzugten Ausführungsform des Verfahrens ist es daher vorgesehen, dass der pH-Wert (zwischen 11 und 12,5 (vorzugsweise zwischen 11,5 und 12,0)) mit Ca(OH)₂ eingestellt wird. Dazu kann beispielsweise eine Ca(OH)₂-Lösung oder ein Feststoff verwendet werden, der in wässriger Lösung Ca(OH)₂ ausbildet (beispielsweise CaO).

Überraschenderweise hat sich gezeigt, dass bei Verwendung von Ca(OH)₂, oder einer entsprechenden Lösung, besonders große Flocken Bariumsulfat erhalten werden, die sich besonders gut abtrennen lassen.

Wie bereits erwähnt, wird nach dem Abtrennen des Quecksilbers über einen Ionenaustauscher Selen aus der Lösung mit vermindertem Quecksilbergehalt entfernt. Bei einer bevorzugten Ausführungsform des erfindungsgemäßen Verfahrens wird dies erreicht, indem ein Eisengemisch zu der Lösung gegeben wird, in Anschluss daran ein pH-Wert zwischen 6 und 8,5, vorzugsweise zwischen 7,0 und 8,0, eingestellt wird, und Selen bzw. selenhaltige Feststoffe abgetrennt werden.

Selen ist in Abwässern von Industrieanlagen überwiegend in der Oxidationsstufe (VI) bzw. als Selenation (SeO₄²⁻) vorhanden. Es wird davon ausgegangen, dass Selenat mit dem Eisen bzw. Eisengemisch reagiert, und zwar vermutlich unter Bildung von unter anderem Fe^{II}₄Fe^{III}₂(OH)₁₂SeO₄·nH₂O, das als Feststoff ausfällt. Ob und wenn welche weiteren selenhaltigen Feststoffe bzw. Feststoffgemische entstehen ist noch nicht genau geklärt, für die Erfindung als solche jedoch auch unwesentlich.

Nach dem Abtrennen des Selens bzw. von selenhaltigen Feststoffen erhält man ein Abwasser mit stark verminderter Sulfat-, Quecksilber- und Selenkonzentration, welches an die Umgebung abgegeben werden kann.

Insbesondere bei der Bearbeitung großer Abwassermengen ist es wünschenswert, die Ausfällung und Abtrennung der verschiedenen Feststoffe zügig durchzuführen.

Überraschenderweise wurde festgestellt, dass die Ausfällung von Selen bzw. selenhaltiger Feststoffe besonders rasch stattfindet, wenn ein Eisengemisch umfassend Eisen(0)- sowie Eisen(II)- und Eisen(III)-Verbindungen zu der Lösung gegeben wird, wobei das Fe(0) vorzugsweise in Pulverform vorliegt. Das Mischungsverhältnis von Fe(0), Fe(II) und Fe(III) hängt von der jeweiligen Selenkonzentration im Abwasser ab.

Auf diese Weise findet die Abscheidung von Selen bzw. selenhaltigen Feststoffen in einen Zeitraum statt, der gegenüber bekannten Verfahren überraschend gering ist und somit eine deutlich günstigere Verfahrensführung ermöglicht.

Bei einer bevorzugten Ausführungsform wird dabei Fe(0) sowie FeCl₂- und FeCl₃-Verbindungen zu der Lösung gegeben, wobei es unerheblich ist, welche genauen Eisenchlorid-Verbindungen (mit oder ohne Kristallwasser) zugegeben werden.

Als besonders wirksam hat es sich herausgestellt, das Eisengemisch als eine wässrige Suspension mit Fe(0) sowie FeCl₂ und FeCl₃ in einem Gewichtsverhältnis von 1:10:10 zu der Lösung zu geben, wobei diese Angaben auf die üblichen Eisenchloride mit Kristallwasser bezogen sind (FeCl₂·4H₂O, FeCl₃·6H₂O).

Die Abscheidung des Selens bzw. der selenhaltigen Feststoffe kann durch die Einstellung des pH-Wertes überraschend stark beeinflusst werden. Bei einer bevorzugten Ausführungsform des erfindungsgemäßen Verfahrens wird der pH-Wert der Lösung nach Zugabe des Eisengemisches durch Hinzufügen von Hydroxidionen oder Hydroxidionen ausbildenden Verbindungen auf einen Wert zwischen 6 und 8,5, vorzugsweise auf einen pH-Wert zwischen 7 und 8,0, eingestellt, wobei bei dem pH-Wert von 8,0 die besten Resultate erzielt werden und daher dieser Wert am bevorzugtesten ist.

Mit der zuvor beschriebenen Verfahrensstufe zur Abtrennung von Selen aus dem Abwasser können Konzentration von < 15 µg Selen pro Liter Abwasser erreicht werden.

Alternativ oder zusätzlich zu der vorgenannten Abscheidung von Selen ist es bei einer bevorzugten Ausführungsform des erfindungsgemäßen Verfahrens vorgesehen, dass das Selen (oder das aus der ersten Abscheidung verbliebene Selen) aus der Lösung mit verminderten Quecksilbergehalt entfernt wird, indem die Lösung über einen stark basischen Ionenaustauscher (mit beispielsweise Dimethylaminoethanol-Gruppen) geführt wird, wobei Selenoxo-Ionen an dem Ionenaustauscher gebunden werden. Durch diese Art der Abscheidung von Selen können extrem geringe Restkonzentrationen von < 5 µg/l in dem Abwasser erreicht werden.

Um die Ausflockung der Feststoffe (bei der Abtrennung von Sulfat und Selen bzw. selenhaltigen Stoffen) zu begünstigen, wird bei der Ausfällung von Bariumsulfat und/oder Selen bzw. selenhaltigen Stoffen ein Flockungshilfsmittel, vorzugsweise Polyacrylamid, zugegeben. Flockungshilfsmittel beschleunigen die Sedimentation oder Flotation der suspendierten Feststoffteilchen, so dass sich die abzutrennenden Feststoffe mit dem Fachmann bekannten Verfahren bzw. Vorrichtungen (wie Zentrifugen, Dekantern, Bandfilter oder Kammerfilterpressen) einfacher und rascher abtrennen lassen. Neben dem bevorzugten Polyacrylamid können auch Polyacrylat, Polyethylenimin, Polyethylenoxid und Naturprodukte wie Stärke und Leim verwendet werden.

Wie eingangs erwähnt kann bei der Ausfällung von Bariumsulfat bewusst mit einer überstöchiometrischen Menge Ba²⁺-Ionen gearbeitet werden, wobei sich die erhöhte Bariumkonzentration bei den nachfolgenden beiden Verfahrensstufen zur Quecksilber- und Selenabscheidung nicht störend auswirkt.

Alle wasser- oder säurelöslichen Bariumverbindungen sind jedoch giftig. Eine Dosis von 1 bis 15 Gramm ist abhängig von der Löslichkeit der jeweiligen Bariumverbindung für einen Erwachsenen tödlich, so dass es bei einer bevorzugten Ausführungsform des Verfahrens vorgesehen ist, dem Abwasser nach Abtrennung von Quecksilber und Selen in einem abschließenden Verfahrensschritt eine sulfathaltige Lösung oder Feststoff zum Ausfällen von Restmengen Bariumsulfat zuzugeben. In Abhängigkeit von der Menge des ausgefällten Bariumsulfats kann dieses vor Abgabe des gereinigten Abwassers abgetrennt werden.

Das Abwasser enthält, bei Abwasser aus Rauchgasentschwefelungsanlagen unter anderem durch den Eintrag über das Rauchgas, große Mengen Chloridionen. Aufgrund der hohen Chloridkonzentration kann das Abwasser mit verminderter Selenkonzentration (aus Schritt e) oder ggf. f)) nicht in eine bzw. in die das Abwasser erzeugende Anlage, beispielsweise in eine Rauchgasentschwefelungsanlage, rückgeführt werden, da sich bei einer solchen Rückführung das Chlorid in dem Abwasser immer weiter aufkonzentrieren würde, da in dem Verfahren keine Chloridabtrennung erfolgt (es ist keine "Chloridsenke" vorhanden).

Bei einer bevorzugten Ausführungsform des Verfahrens ist es daher vorgesehen, dass das Abwasser aus Schritt e) oder Schritt f) über eine Pumpe in mindestens ein Umkehrosmose-Membranmodul gefördert wird, in dem eine Auftrennung des Abwassers in ein Permeat mit einem verminderten Chloridgehalt und ein Konzentrat mit einem erhöhten Chloridgehalt durchgeführt wird, und das Permeat mit vermindertem Chloridgehalt in die Anlage rückgeführt wird, aus welcher das Abwasser für Schritt a) des Verfahrens bereitgestellt wurde. Das Konzentrat wird an die Umwelt abgegeben.

Bei dieser Ausführungsform wird der Bedarf an Frischwasser der das Abwasser erzeugenden Anlage stark reduziert, da ein Teil des Wassers nach der Reinigung zirkuliert wird. Ferner vermindert sich die an die Umwelt angegebene Wassermenge, und beide Faktoren ermöglichen eine deutlich kostengünstigere Verfahrensführung.

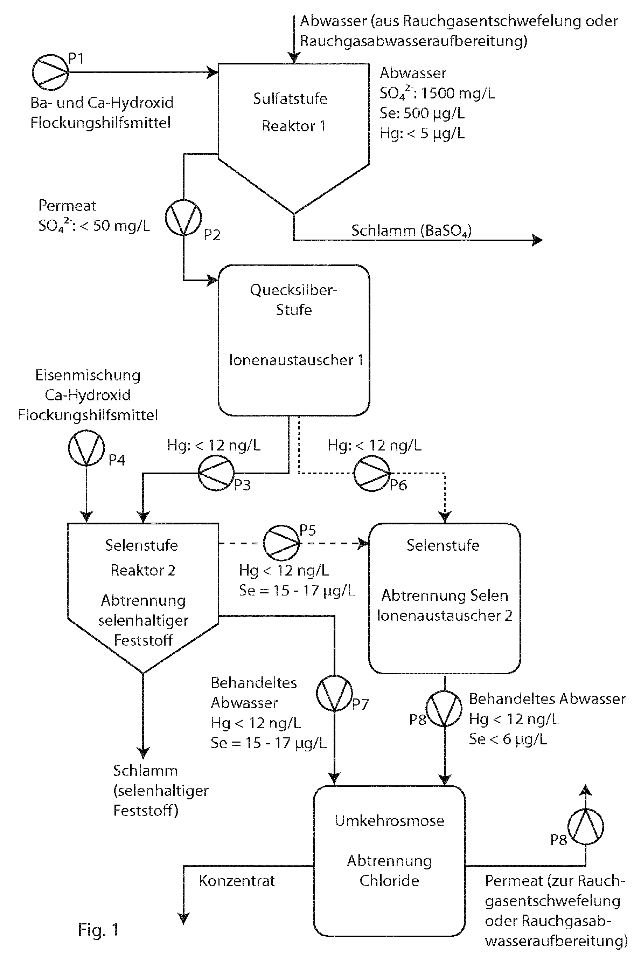

Nachfolgend werden bevorzugte Ausführungsformen des erfindungsgemäßen Verfahrens beschrieben, wobei Figur 1 einen schematischen Ablauf bei einer semikontinuierlichen Verfahrensführung zeigt.

### 1. Erste bevorzugte Ausführungsform (semikontinuierlich)

### 1.1. Allgemeine Beschreibung

Bei einer ersten Ausführungsform des Verfahrens (siehe Figur 1) wird mit Quecksilber und Selen verunreinigtes sulfathaltiges Abwasser einer Rauchgasentschwefelungsanlage als Abwasservolumen V1 mit bekannter Sulfatkonzentration in einem ersten Reaktor 1 bereitgestellt.

Mit Hilfe einer Pumpe P1 werden dem Abwasservolumen V1 Ba- und Ca-Hydroxid sowie ein Flockungshilfsmittel zugeführt, wobei die genauen Angaben zu der Art und Weise der Zuführung und zu den Mengen in einer detaillierten Beschreibung (siehe unten) aufgeführt sind.

Der entstehende Feststoff, der primär Bariumsulfat enthält, in Abhängigkeit von der Menge des zugeführten Fällungsmittels aber auch Bariumselenat und andere Feststoffe enthalten kann, wird abgetrennt und in Abhängigkeit von dessen Reinheit weiterverwertet oder entsorgt.

Das feststoffarme Abwasser der vorgenannten Sulfatfällungsstufe wird über eine Pumpe P2 einer Quecksilberstufe mit einem Ionenaustauscher 1 zugeführt, mittels welchem das Quecksilber bis zu einer Konzentration von < 12 ng/l aus dem Abwasser abgetrennt wird, so dass ein Abwasser mit vermindertem Quecksilbergehalt entsteht.

Das Abwasser mit dem verminderten Quecksilbergehalt kann über eine Pumpe P3 einem Reaktor 2 der Selenfällungsstufe zur Abtrennung von Selen und selenhaltigen Feststoffen zugeführt werden. In Reaktor 2 wird die zugeführte Lösung zum Ausfällen von selenhaltigen Verbindungen unter Rühren über eine Pumpe P4 mit einer Eisenmischung, Ca-Hydroxid und einem Flockungshilfsmittel versetzt (zu den genauen Angaben siehe detaillierte Beschreibung). Nach einer vorgegebenen Reaktionszeit werden die entstehenden Feststoffe abgetrennt, das Abwasser hat (in Abhängigkeit von den genauen Reaktionsbedingungen) eine Quecksilberrestkonzentration von < 12 ng/L und eine Selenrestkonzentration von < 15 µg/L.

Sofern die Restkonzentrationen den vorgegebenen Grenzwerten entsprechen, kann das Abwasser an die Umwelt abgegeben werden oder zumindest teilweise wieder in den Kreislauf rückgeführt werden (beispielsweise in die Rauchgasentschwefelungsanlage).

Soll die Selenrestkonzentration weiter gesenkt werden, kann das Abwasser alternativ über Pumpe P5 einer Selenabtrennung mit einem Ionenaustauscher 2 zugeführt werden. In Ionenaustauscher 2 wird die Selenrestkonzentration auf < 6 µg/l vermindert. Der Ablauf von Ionenaustauscher 2 kann dann entweder an die Umwelt abgegeben werden oder zumindest zum Teil wieder in den Kreislauf rückgeführt werden (beispielsweise in die Rauchgasentschwefelungsanlage).

Die Lösung mit dem verminderten Quecksilbergehalt kann alternativ, wenn beispielsweise die Selenbelastung nur relativ gering ist, direkt (und ohne "Umweg" über die Selenabscheidung durch Ausfällen von selenhaltigen Verbindungen) über Pumpe P6 dem Ionenaustauscher 2 zugeführt werden. Der Ablauf von Ionenaustauscher 2 kann auch in diesem Fall entweder an die Umwelt abgegeben werden oder zumindest zum Teil wieder in den Kreislauf rückgeführt werden (beispielsweise in die Rauchgasentschwefelungsanlage).

Sofern der Ablauf von Ionenaustauscher 2 oder Reaktor 2 der Selenfällungsstufe noch zu stark mit Barium belastet ist, weil beispielsweise in der Sulfatfällungsstufe eine überstöchiometrische Menge Fällungsmittel verwendet wurde, kann dem Teil des Ablauf des Ionenaustauschers 2 oder des Reaktors 2, der der Umwelt zugeführt werden soll, wieder Sulfat zugegeben werden, um Reste von Barium als Bariumsulfat auszufällen, welches in Abhängigkeit von dessen Menge vor Abführung abgetrennt werden kann. Bei dem rückzuführenden Teil des Ablaufs von Ionenaustauscher 2 oder Reaktor 2 ist eine Abtrennung von Barium nicht unbedingt erforderlich, kann aber wie oben angegeben erfolgen.

Sofern eine Rückführung zumindest eines Teils des behandelten Abwassers in die das Abwasser erzeugende Anlage gewünscht ist, kann das behandelte Abwasser aus der Selenstufe (oder zumindest ein Teil dieses Abwassers) über eine Pumpe P7 oder P8 einer Umkehrosmosestufe zugeführt werden, in welcher das behandelte Abwasser in ein Konzentrat mit erhöhter Chloridkonzentration und ein Permeat mit verminderter Chloridkonzentration getrennt wird, wobei die Chloridkonzentration in dem Permeat geringer ist als die des in Schritt a) bereitgestellten verunreinigten Abwassers. Das Permeat wird über Pumpe P8 der das Abwasser erzeugenden Anlage zugeführt, wo es an einer geeigneten Stelle dem Verfahren zugeführt wird. Das Konzentrat wird an die Umwelt abgegeben.

### 1.2 Detaillierte Beschreibung

Nachfolgend werden die einzelnen Stufen des semikontinuierlichen Verfahrens detailliert beschrieben, und zwar bezogen auf eine Verfahrensführung im Labormaßstab, da auf diese Weise auch die hier verwendeten Messergebnisse zustande kamen.

### 1.2.1. Sulfatfällungsstufe

Das Abwasser einer Rauchgasentschwefelungsanlage wird als mit Quecksilber und Selen verunreinigtes Abwasservolumen V1 mit bekannter Sulfatkonzentration in einem Reaktor 1 bereitgestellt.

### 1.2.1.1 Rasche Zugabe Fällungsmittel (Versuche Nr. 3 - 5)

Dem Abwasservolumen V1 wird ohne Verzögerung eine stöchiometrische Menge Bariumhydroxid als Fällungsmittel in Form einer 10-Gew%-Lösung unter Rühren zugegeben, wobei der pH-Wert des Abwasservolumens auf etwa 10,5 - 11,0 ansteigt. Im Anschluss an die Zugabe der Bariumhydroxid-Lösung wird eine 20-Gew%-Kalziumhydroxid-Suspension zugegeben, bis sich ein pH-Wert von 11,5 - 11,6 einstellt. Währenddessen wird eine angepasste Menge Polyacrylamid als Flockungshilfsmittel in kleineren Mengen zugegeben. Die Suspension wird dann 1 Stunde gerührt und der bzw. die Feststoff(e) abgetrennt. Dazu wird das Abwasser abgepumpt und der Feststoff wird im Anschluss durch ein Ventil am unteren Teil des Reaktorgefäßes abgeführt und entwässert. Zu Prüfzwecken wurde der Sulfatgehalt des Abwassers bestimmt.

### 1.2.1.2 Langsame Zugabe Fällungsmittel (Versuche 6 - 11) (Beste bekannte Ausführung für Sulfatfällungsstufe)

Dem Abwasservolumen V1 wird langsam (und in Abhängigkeit von dem Volumen V1; beispielsweise über eine Zeitdauer von 5 - 8 Minuten) eine stöchiometrische Menge Bariumhydroxid als Fällungsmittel in Form einer 10-Gew%-Lösung zugegeben, wobei der pH-Wert des Abwasservolumens auf etwa 10,5 - 11,0 ansteigt. Im Anschluss an die Zugabe der Bariumhydroxid-Lösung wird eine 20-Gew%-Kalziumhydroxid-Suspension zugegeben, bis sich ein pH-Wert von 11,5 - 11,6 einstellt. Währenddessen wird eine angepasste Menge Polyacrylamid als Flockungshilfsmittel in kleineren Mengen zugegeben. Die Suspension wird dann 1 Stunde (Versuche 6 - 8) bzw. 0,5 Stunden (Versuche 9 - 11) gerührt und der Feststoff abgetrennt. Zu Prüfzwecken wurde der Sulfatgehalt des Abwassers bestimmt.

### Prozessparameter Versuche 6 - 11

### Abwasser

V = 1L, T = 25 °C, p = 1 atm., pH-Wert = 7,5 -8,5, Reaktionszeit
60 Min. (Versuche 6 - 8, 30 Min. Versuche 9 - 11) Chemikalien
   - 100 mL Ba(OH)₂·8H₂O (≥ 98%, CAS 12230-71-6) 10%-Gew. werden langsam zugegeben (10 mL/Min.). Der pH-Wert steigt auf 10,5 -11,0.
   - Ca(OH)₂ (> 95% ACS, CAS 1305-620) 20%-Gew. Suspension wurde zusammen mit 1 mL Polyacrylamid (50%-Gew. wässrige Lösung, CAS 9003-05-8) bis zum pH-Wert 11,5 - 12,0

Wie der nachfolgenden Tabelle 1 zu entnehmen ist, kann der Sulfatgehalt mit Bariumhydroxid als Fällungsmittel bei rascher Zugabe des Fällungsmittels auf etwa 35 mg/L vermindert werden (Versuche 3 -5).

Dieser Wert liegt deutlich über den Sulfatkonzentrationen, die mit Fällungsmittelkombinationen (Versuche 1 und 2) erreicht werden können. Der Nachteil bei der Verwendung der Fällungsmittelkombinationen gemäß den Versuchen 1 und 2 ist, dass die neben Bariumhydroxid als Fällungsmittel eingesetzten Verbindungen deutlich kostenintensiver sind und entsprechende Fällungsmittelkombinationen großtechnisch aus Kostengründen ausscheiden.

Wie die Versuche 6 - 11 deutlich zeigen, kann die Sulfatrestkonzentration aber überraschend deutlich vermindert werden, indem die gleiche Menge des Fällungsmittel Bariumhydroxid nicht rasch und ohne Verzögerung, sondern über einen längeren Zeitraum, der von dem Abwasservolumen abhängig ist, zugegeben wird. Dabei verläuft die Ausfällung trotz verlangsamter Zugabe des Fällungsmittels ohne messbare Verzögerung (siehe Versuche 9 - 11).

**Tabelle 1: Sulfatkonzentration im Abwasser nach Fällung Bariumsulfat**

| Versuch Nr. | Zeit (h) | Fällungsmittel | Zugegebene Menge Fällungsmittel (ml) | SO₄²⁻ (mg/l) Abwasser |
|---|---|---|---|---|
| 1 | 1 | CaAl₂O₄ (99%) + Al₂O₃ (98%) + Ba(OH)₂ (25g + 100g + 50 g) 17,5%-Gew. | 150 | < 10 |
| 2 | 1 | Al₂O₃ (98%) + Ba(OH)₂ (100g + 100 g) 20%-Gew. | 100 | < 10 |
| 3 | 1 | Ba(OH)₂ (100g @ 1 L Deionat) | 100 | 35 |
| 4 | 1 | Ba(OH)₂ (100g @ 1 L Deionat) | 100 | 30 |
| 5 | 1 | Ba(OH)₂ (100g @ 1 L Deionat) | 100 | 35 |
| 6 | 1 | Ba(OH)₂ (100g @ 1 L Deionat) | 100 | < 10 |
| 7 | 1 | Ba(OH)₂ (100g @ 1 L Deionat) | 100 | < 10 |
| 8 | 1 | Ba(OH)₂ (100g @ 1 L Deionat) | 100 | < 10 |
| 9 | 0,5 | Ba(OH)₂ (100g @ 1 L Deionat) | 100 | < 10 |
| 10 | 0,5 | Ba(OH)₂ (100g @ 1 L Deionat) | 100 | < 10 |
| 11 | 0,5 | Ba(OH)₂ (100g @ 1 L Deionat) | 100 | < 10 |

### 1.2.2 Quecksilberstufe

Das Abwasser aus der Sulfatfällungsstufe wird in eine Ionenaustauscherkolonne (Höhe 435 mm, ∅ = 90 mm), die mit 500 g Ionenaustauscherharz Lewatit TP 214 aus Thiocarbamidgruppen (CH₄N₂S) gefüllt ist, gefördert. Das Abwasser wurde mittels einer Membranpumpe in die Kolonne gefördert.

Mittels Kaltdampfatomfluoreszenzspektroskopie wurde der Quecksilbergehalt der die Kolonne verlassenden Lösung ermittelt. (die Nachweisgrenze dieser Methode beträgt 1 ng/l). Die Hg-Konzentration der Lösung nach der Quecksilber-Stufe betrug 5,5 ng/l.

### 1.2.3. Selenfällungsstufe

### 1.2.3.1 Selenabscheidung über Abtrennung Feststoffe

In der Selenfällungsstufe werden Selen bzw. selenhaltige Verbindungen abgetrennt. Um ein optimales Trennergebnis zu gewinnen, wurden auch für die Selenfällungsstufe viele Laborversuche durchgeführt, deren Ergebnisse in der unten dargestellten Tabelle 2 wiedergegeben sind. Im Folgenden wird auf die einzelnen Versuche bzw. Versuchsreihen eingegangen, und zwar insbesondere im Hinblick auf die Auswirkungen der Änderung verschiedener Prozessparameter.

Eine Mischung von metallischem pulverförmigen Eisen (≥ 99% Reinheitsgrad), FeCl₂·4H₂O (≥ 99%) sowie FeCl₃·6H₂O (≥ 98%) ("Eisenmischung" in Tabelle 2) wurde in verschiedenen Mengenverhältnissen und Mengen dem Abwasser mit vermindertem Quecksilbergehalt (aus der Quecksilberstufe) zugesetzt. Proben wurden jede Stunde gezogen und eine Bestimmung von Selen nach DIN EN ISO 17294-2 (ICP-MS) durchgeführt.

Wie Tabelle 2 zu entnehmen ist, spielte der Einfluss der Reaktionszeit eine untergeordnete Rolle (Versuche 14 - 23), die Selenrestkonzentration schwankte bei Reaktionszeiten von 1 bis 3 bzw. 4 Stunden nur geringfügig.

Der Einfluss des pH-Wertes war jedoch überraschend groß, es wurden relativ große Schwankungen bei der Selenkonzentration zwischen pH-Werten von 7 bis 11 festgestellt.

Der pH-Wert des Abwassers mit vermindertem Quecksilbergehalt betrug ca. 6,5. Nach Zugabe der jeweiligen Eisenmischung sank der pH-Wert bis ca. 3 - 4, und es wurde eine 20 Gew%-Suspension Ca(OH)₂ zur Justierung des pH-Wertes zugegeben.

Eine Erhöhung des pH-Wertes auf ca. 11 führte nicht zu niedrigen Selenrestkonzentrationen. Es wurde festgestellt, dass im fast neutralen bis leicht basischen Milieu (pH-Werte zwischen 7,4 und 8,0; Versuche 18 - 23) die größte Selenabscheidung zu erzielen war (Restkonzentration Selen 15 µg/l).

Das Mengenverhältnis Fe/Fe(II)/Fe(III) 1:10:10 (Versuche 18 - 23) erwies sich als optimal. Wie ein Vergleich der Versuche 18 - 20 und 21 - 23 zeigt, bewirkt eine erhöhte Zugabe an Eisenmischung keine weitere Absenkung der Selenrestkonzentration.

Die in Tabelle 2 gezeigten Versuchsergebnisse beziehen sich alle auf Eisenmischungen mit Eisenchlorid-Verbindungen, da mit diesen Verbindungen die besten Ergebnisse bei der Selenabscheidung erzielt wurden.

### Langsame Zugabe Eisenmischung (Versuche 18 - 20)

### (Beste bekannte Ausführung für Selenstufe per Abscheidung)

Einem Abwasservolumen V2 der Lösung mit vermindertem Quecksilbergehalt (Ablauf der Quecksilberstufe) wurde langsam (und in Abhängigkeit vom Volumen V2; beispielsweise über eine Zeitdauer von 5 Minuten) 100 ml einer Suspension der Eisenmischung in Wasser (siehe Versuche 18 - 20) zugegeben, wobei sich ein pH-Wert von ca. 3,0 - 3,5 einstellt. Im Anschluss an die Zugabe wurde eine 20-Gew%-Calciumhydroxid-Suspension zugegeben, bis sich ein pH-Wert von ca. 8 einstellte. Gleichzeitig wurde eine angepasste Menge Polyacrylamid als Flockungshilfsmittel zugegeben. Die Suspension wurde dann 3 Stunden gerührt und der Feststoff abgetrennt. Nach jeder vollen Stunde wurde eine Probe zur Bestimmung des Selengehalts gezogen.

Das Abwasser der Selenabscheidung mittels Abtrennung von Feststoffen kann entweder der Selenabscheidung mit Ionenaustaucher zugeführt werden oder an die Umwelt abgegeben werden.

### Prozessparameter:

### Lösung mit vermindertem Quecksilbergehalt (aus Hg-Stufe)

V = 11, T = 25 °C, p = 1 atm., pH-Wert = 6,0 - 7,0. Reaktionszeit: 60 Min.

### Chemikalien

- 100 mL (20 mL/Min.) einer eisenhaltigen Lösung^{[1]} wird zu 1 L Lösung aus der Hg-Stufe zugegeben (pH-Wert nach Zugabe: 3,0 - 3,5)
- Ca(OH)₂ (> 95% ACS, CAS 1305-620) 20%-Gew. Suspension bis zum pH-Wert 7,5 - 8,0; zusammen mit 1 mL Polyacrylamid (50%-Gew. wässrige Lösung, CAS 9003-05-8) zugegeben
- [1] 1 g Fe (99%, Pulver, CAS 7439-89-6), 10 g FeCl₂·4H₂O (≥ 99%, CAS 13478-10-9) sowie 10 g FeCl₃·6H₂O (≥ 99%, CAS 10025-77-1) in 500 mL Deionat.

Tabelle 3 zeigt Versuchsergebnisse von Vergleichsversuchen. Die Abscheidung von Selen wurde einmal mit einer bekannten Eisenmischung (Versuche 1 - 3), aufweisend Fe(0) und Fe(II), und mit der bei dem erfindungsgemäßen Verfahren eingesetzten Eisenmischung, umfassend Fe(0) sowie Fe(II) und Fe(III), untersucht, und zwar bei verschiedenen Parametern.

Überraschenderweise hat die Verwendung der erfindungsgemäßen Eisenmischung eine ganz erhebliche, unerwartete Auswirkung auf die Selenabscheidung.

Bezogen auf pH-Wert 8, bei welchem die Selenabscheidung bei beiden Versuchsreihen am größten war, bewirkt die erfindungsgemäße Eisenmischung in der bevorzugten Zusammensetzung bei einer Reaktionszeit von einer Stunde eine Steigerung der Selenabscheidung um den Faktor 10. Wie Tabelle 2 zu entnehmen ist, tritt der Effekt der verbesserten Selenabscheidung auch bei anderen Zusammensetzungen der Eisenmischung auf, nicht jedoch in einem Maße, wie es bei der bevorzugten Eisenmischung der Fall ist.

Bei Verwendung der erfindungsgemäßen Eisenmischung kann die Selenabscheidung also wesentlich schneller und damit kostengünstiger durchgeführt werden.

### 1.2.3.2 Selenabtrennung mit Ionenaustauscher

Mit der vorgenannten Methode der Selenabscheidung über die Abtrennung von Feststoffen können Restkonzentrationen von < 15 µg/l erreicht werden. Sind die einzuhaltenden Grenzwerte geringer, ist die oben genannte Vorgehensweise nicht ausreichend.

Alternativ (oder additiv nach der Selenabscheidung über Abtrennung von Feststoffen), kann Selen mit einem Ionenaustauscher abgetrennt werden. Als Zulauf für den Ionenaustauscher dient entweder der Ablauf der Quecksilber-Stufe oder das Abwasser der oben beschriebenen Selenabscheidung über die Abtrennung von Feststoffen

Um eine Selenkonzentrationen in der behandelten Lösung < 6 µg/L zu erhalten, wurde das Ionenaustauscherharz DOWEX Marathon A2 eingesetzt. Laut Herstellerangaben ist dieses Harz in der Lage, Anionen aus Abwässern mit hohem Gehalt an Chlorid-Ionen zu entfernen, was insbesondere dann von Vorteil ist, wenn Selen vorher bereits mit Hilfe der Eisenmischung abgetrennt wurde. Das Harz besitzt Dimethylethanolamin als funktionelle Gruppe, das der Fraktion der stark basischen Ionenaustauscherharze zugeordnet ist.

Ähnlich wie bei der Quecksilber-Stufe wurde eine 1,5 L Kolonne mit 0,5 L Ionenaustauscherharz DOWEX Marathon A2 gefüllt. Die Durchflussgeschwindigkeit betrug 1 l/h. Proben wurden aus einem Sammelbehälter in regulären Abständen gezogen und gemischt. Die Mischprobe wurde anschließend zu einem Analytischen Labor geschickt. Die Selenrestkonzentration der Mischprobe betrug < 5 µg/L. Genauere Angaben konnten wegen der Bestimmungsgrenze von 5 µg/L für Selen mittels ICP-MS nicht betroffen werden.

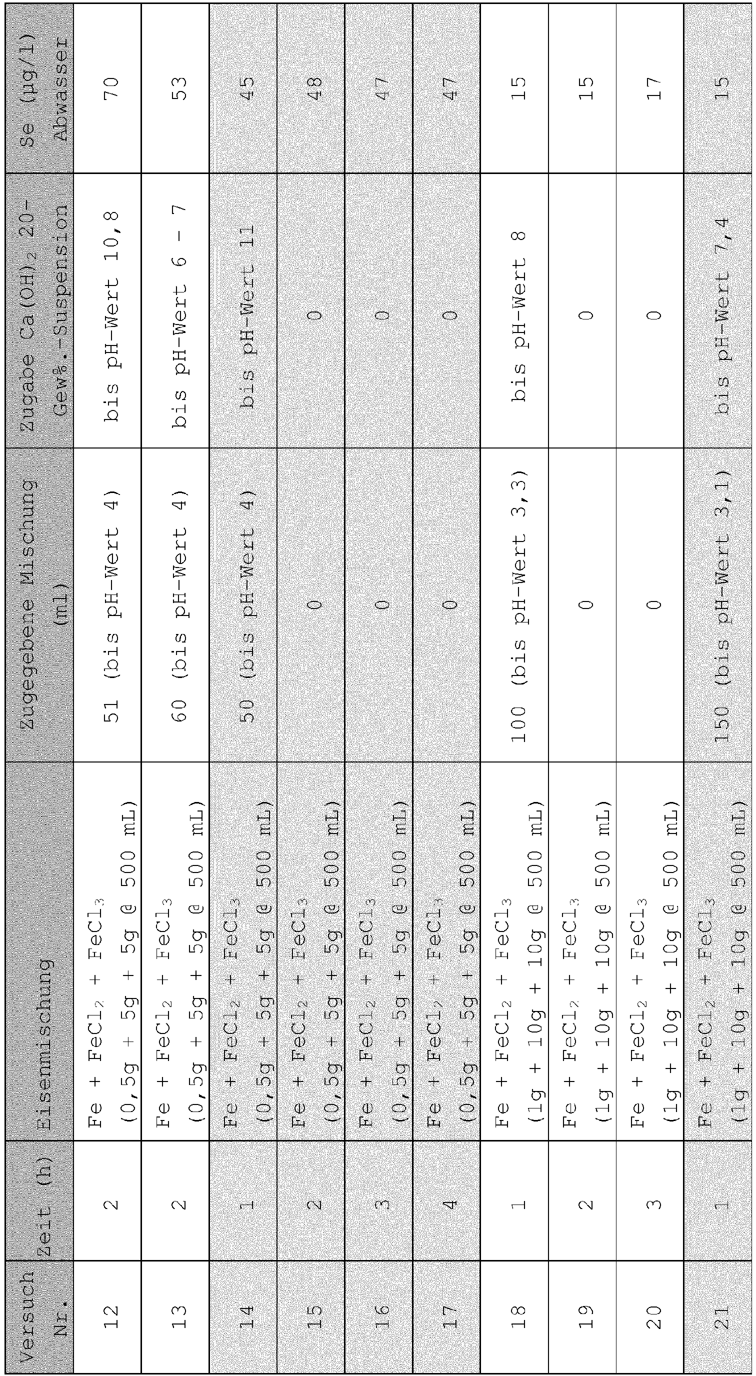

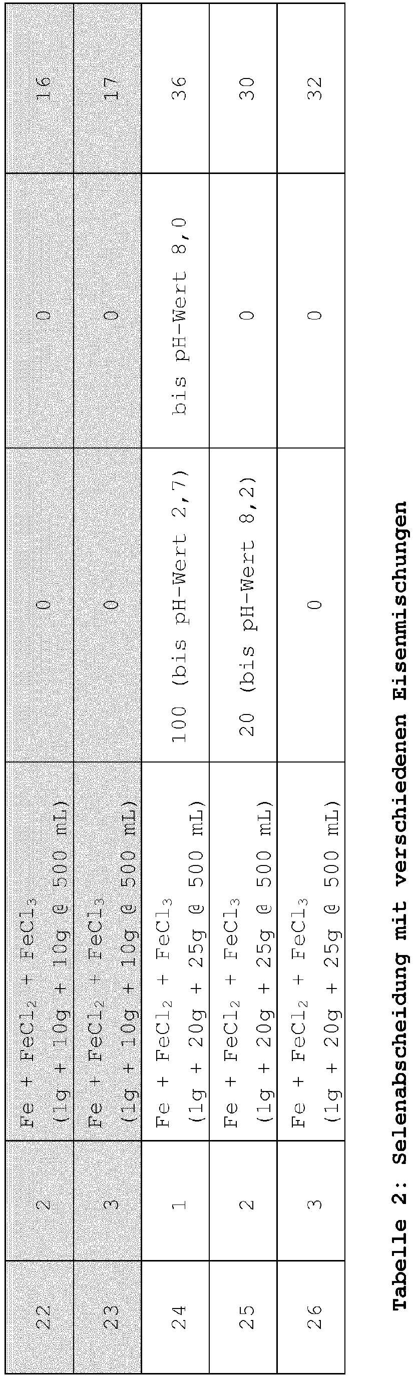

**Tabelle 3: Vergleichsversuche zur Selenabscheidung**

| Versuch Nr. | Eisenmischung | justierter pH-Wert | Se (µg/l) vor Abscheidung | Se (µg/l) nach Abscheidung | %-Abscheidung |
|---|---|---|---|---|---|
| 1 | Fe(0) + FeCl₂ (1:10) | 6, 0 | 380 | 330 | 13,16 |
| 1 | Fe(0) + FeCl₂ (1:10) | 7,0 | 270 | 220 | 18,52 |
| 1 | Fe(0) + FeCl₂ (1:10) | 8,0 | 323 | 184 | 43, 03 |
| 1 | Fe(0) + FeCl₂ + FeCl₃ (1:10:10) | 6, 0 | 323 | 95,4 | 70,46 |
| 1 | Fe(0) + FeCl₂ + FeCl₃ (1:10:10) | 7,0 | 323 | 104 | 67, 80 |
| 1 | Fe(0) + FeCl₂ + FeCl₃ (1:10:10) | 8,0 | 331 | 14,5 | 95, 62 |

### 2. Zweite bevorzugte Ausführungsform (kontinuierlich)

Bei einer zweiten Ausführungsform des Verfahrens (siehe Figur 1) wird mit Quecksilber und Selen verunreinigtes sulfathaltiges Abwasser als Abwasservolumen V1 mit bekannter Sulfatkonzentration in einem Durchflussreaktor bereitgestellt.

Die einzelnen Verfahrensschritte entsprechenden dem semikontinuierlichen Verfahren, jedoch wird nicht in separaten Reaktoren gearbeitet, sondern in einem durchgehenden Durchflussreaktor, bei welchem die einzelnen Schritte bei unterschiedlichen Positionen der "Verfahrensstrecke" stattfinden.

Im Hinblick darauf, dass die einzelnen Schritte gleich sind, lediglich anlagentechnische anders ausgeführt werden, wird auf eine genauere Beschreibung verzichtet, da einem Fachmann die Funktionsweise eines Durchflussreaktors bekannt ist. Darüber hinaus sind die notwendigen Verfahrenstechniken zum Durchführen der einzelnen Schritte der unterschiedlichen Stufen dem Fachmann bekannt, da es sich um Standardmethoden handelt.

## Patentansprüche

1. Verfahren zum Entfernen von Quecksilber und Selen aus sulfathaltigem Abwasser, insbesondere Abwasser aus Rauchgasentschwefelungsanlagen, wobei:
a) ein mit Quecksilber und Selen verunreinigtes Abwasservolumen V1 mit bekannter Sulfatkonzentration bereitgestellt wird,
b) BaSO₄ aus dem bereitgestellten Abwasservolumen ausgefällt wird, wozu eine definierte Menge Ba²⁺-Ionen in das Abwasservolumen V1 gegeben wird,
c) das entstandene BaSO₄ abgetrennt wird, wobei ein feststoffarmes Abwasser erhalten wird,
d) das feststoffarme Abwasser zum Entfernen von Quecksilber über einen Ionenaustauscher geführt wird, wobei ein Abwasser mit vermindertem Quecksilbergehalt erhalten wird, und
e) Selen und/oder Selenverbindungen aus dem Abwasser mit vermindertem Quecksilbergehalt entfernt werden.

2. Verfahren zum Entfernen von Quecksilber und Selen aus sulfathaltigem Abwasser nach Anspruch 1, **dadurch gekennzeichnet, dass** die definierte Menge Ba²⁺-Ionen über einen definierten Zeitraum t in einer definierten Anzahl von n Teilen zu definierten, unterschiedlichen Zeitpunkten t1 bis tn zugeführt wird.

3. Verfahren zum Entfernen von Quecksilber und Selen aus sulfathaltigem Abwasser nach Anspruch 1, **dadurch gekennzeichnet, dass** die definierte Menge Ba²⁺-Ionen über eine definierte Verfahrenstrecke x in einer definierten Anzahl von n Teilen an definierten, unterschiedlichen Verfahrensstreckenpositionen x1 bis xn zugeführt wird.

4. Verfahren zum Entfernen von Quecksilber und Selen aus sulfathaltigem Abwasser nach Anspruch 2 oder 3, **dadurch gekennzeichnet, dass** BaSO₄ nach Zuführung von 1 bis n Teilen der definierten Menge Ba²⁺-Ionen abgetrennt wird.

5. Verfahren zum Entfernen von Quecksilber und Selen aus sulfathaltigem Abwasser nach einem der Ansprüche 1 - 4, **dadurch gekennzeichnet, dass** nach Zugabe der definierten Menge Ba²⁺-Ionen oder eines bestimmten Teils dieser Menge ein pH-Wert zwischen 11 und 12,5 mit Hydroxidionen oder Hydroxidionen ausbildenden Verbindungen eingestellt wird.

6. Verfahren zum Entfernen von Quecksilber und Selen aus sulfathaltigem Abwasser nach Anspruch 5, **dadurch gekennzeichnet, dass** der pH-Wert zwischen 11 und 12,5 durch Zugabe einer
geeigneten hydroxidhaltigen Lösung der ersten und/oder zweiten Hauptgruppe des Periodensystems eingestellt wird.

7. Verfahren zum Entfernen von Quecksilber und Selen aus sulfathaltigem Abwasser nach Anspruch 5, **dadurch gekennzeichnet, dass** der pH-Wert zwischen 11 und 12,5 mit Ca(OH)₂ eingestellt wird.

8. Verfahren zum Entfernen von Quecksilber und Selen aus sulfathaltigem Abwasser nach einem der Ansprüche 1 - 7, **dadurch gekennzeichnet, dass** in Schritt e) das Selen aus dem Abwasser mit vermindertem Quecksilbergehalt entfernt wird, indem
e1) ein Eisengemisch zum Abwasser gegeben wird,
e2) im Anschluss daran ein pH-Wert zwischen 6 und 8,5, vorzugsweise zwischen 7,0 und 8,0, eingestellt wird, und
e3) Selen bzw. selenhaltige Feststoffe abgetrennt werden.

9. Verfahren zum Entfernen von Quecksilber und Selen aus sulfathaltigem Abwasser nach Anspruch 8, **dadurch gekennzeichnet, dass** Fe(0) sowie Fe(II)- und Fe(III)-Verbindungen zu dem Abwasser mit vermindertem
Quecksilbergehalt gegeben werden, wobei vorzugsweise pulverförmiges Fe(0) zu der Lösung gegeben wird.

10. Verfahren zum Entfernen von Quecksilber und Selen aus sulfathaltigem Abwasser nach Anspruch 9, **dadurch gekennzeichnet, dass** Fe(0) sowie FeCl₂ und FeCl₃ zu dem Abwasser mit vermindertem Quecksilbergehalt gegeben werden.

11. Verfahren zum Entfernen von Quecksilber und Selen aus sulfathaltigem Abwasser nach Anspruch 10, **dadurch gekennzeichnet, dass** eine wässrige Suspension mit Fe(0) sowie FeCl₂ und FeCl₃ in einem Gewichtsverhältnis 1:10:10 zu dem Abwasser mit vermindertem Quecksilbergehalt gegeben werden.

12. Verfahren zum Entfernen von Quecksilber und Selen aus sulfathaltigem Abwasser nach einem der Ansprüche 8 - 11, **dadurch gekennzeichnet, dass** der pH-Wert durch Hinzufügen von Hydroxidionen oder Hydroxidionen ausbildenden Verbindungen eingestellt wird.

13. Verfahren zum Entfernen von Quecksilber und Selen aus Abwässern nach einem der Ansprüche 1 - 12, **dadurch gekennzeichnet, dass** in Schritt e) das Selen aus dem Abwasser mit verminderten Quecksilbergehalt entfernt wird, indem das Abwasser über einen stark basischen Ionentauscher geführt wird, wobei Selenoxoionen an dem Ionenaustauscher gebunden werden.

14. Verfahren zum Entfernen von Quecksilber und Selen aus Abwässern nach einem der Ansprüche 1 - 13, **dadurch gekennzeichnet, dass** in Schritt b) und / oder e) ein Flockungshilfsmittel, vorzugsweise Polyacrylamid, zugegeben wird.

15. Verfahren zum Entfernen von Quecksilber und Selen aus Abwässern nach einem der Ansprüche 1 - 14, **dadurch gekennzeichnet, dass** dem Abwasser in einem Schritt f) eine sulfathaltige Lösung oder Feststoff zum Ausfällen von Bariumsulfat zugegeben wird.

16. Verfahren zum Entfernen von Quecksilber und Selen aus Abwässern nach einem der Ansprüche 1 - 15, **dadurch gekennzeichnet, dass** das Abwasser aus Schritt e) oder Schritt f) über eine Pumpe in mindestens ein Umkehrosmose-Membranmodul gefördert wird, in dem eine Auftrennung des Abwassers in ein Permeat mit einem verminderten Chloridgehalt und ein Konzentrat mit einem erhöhten Chloridgehalt erfolgt, und
das Permeat mit vermindertem Chloridgehalt in eine das Abwasser erzeugende Anlage rückgeführt wird.

## Claims

1. A method for removing mercury and selenium from waste water containing sulphates, in particular waste water from flue gas desulphurization plants, wherein:
a) a volume of waste water V1 contaminated with mercury and selenium having a known sulphate concentration is provided,
b) BaSO₄ is precipitated from the volume of waste water which has been provided, thereby producing a defined quantity of Ba²⁺ ions in the volume of waste water V1,
c) the BaSO₄ formed is separated, whereupon waste water which is depleted in solids is obtained,
d) in order to remove mercury, the waste water which is depleted in solids is fed over an ion exchanger, whereupon waste water with a reduced mercury content is obtained, and
e) selenium and/or selenium compounds are removed from the waste water with a reduced mercury content.

2. The method for removing mercury and selenium from waste water containing sulphates as claimed in claim 1, **characterized in that** the defined quantity of Ba²⁺ ions is supplied over a defined period of time t in a defined number of n portions at defined, different points in time t1 to tn.

3. The method for removing mercury and selenium from waste water containing sulphates as claimed in claim 1, **characterized in that** the defined quantity of Ba²⁺ ions is supplied over a defined process section x in a defined number of n portions at defined, different positions in the process section x1 to xn.

4. The method for removing mercury and selenium from waste water containing sulphates as claimed in claim 2 or claim 3, **characterized in that** BaSO₄ is separated out after supplying 1 to n portions of the defined quantity of Ba²⁺ ions.

5. The method for removing mercury and selenium from waste water containing sulphates as claimed in one of claims 1 to 4, **characterized in that** after adding the defined quantity of Ba²⁺ ions or a specific portion of this quantity, the pH is adjusted to between 11 and 12.5 using hydroxide ions or hydroxide-developing ions.

6. The method for removing mercury and selenium from waste water containing sulphates as claimed in claim 5, **characterized in that** the pH is adjusted to between 11 and 12.5 by adding a suitable hydroxide-containing solution from the first and/or second main group of the periodic table.

7. The method for removing mercury and selenium from waste water containing sulphates as claimed in claim 5, **characterized in that** the pH is adjusted to between 11 and 12.5 using Ca(OH)₂.

8. The method for removing mercury and selenium from waste water containing sulphates as claimed in one of claims 1 to 7, **characterized in that** in step e), the selenium is removed from the waste water with a reduced mercury content as follows:
e1) an iron mixture is added to the waste water,
e2) the pH is then adjusted to between 6 and 8.5, preferably to between 7.0 and 8.0, and
e3) selenium or selenium-containing solids are separated out.

9. The method for removing mercury and selenium from waste water containing sulphates as claimed in claim 8, **characterized in that** Fe(0) as well as Fe(II) and Fe(III) compounds are added to the waste water with a reduced mercury content, wherein preferably, powdered Fe(0) is added to the solution.

10. The method for removing mercury and selenium from waste water containing sulphates as claimed in claim 9, **characterized in that** Fe(0) as well as FeCl₂ and FeCl₃ are added to the waste water with a reduced mercury content.

11. The method for removing mercury and selenium from waste water containing sulphates as claimed in claim 10, **characterized in that** an aqueous suspension with Fe(0) as well as FeCl₂ and FeCl₃ in a weight ratio of 1:10:10 is added to the waste water with a reduced mercury content.

12. The method for removing mercury and selenium from waste water containing sulphates as claimed in one of claims 8 to 11, **characterized in that** the pH is adjusted by adding hydroxide ions or hydroxide ion-developing compounds.

13. The method for removing mercury and selenium from waste waters as claimed in one of claims 1 to 12, **characterized in that** in step e), the selenium is removed from the waste water with a reduced mercury content by feeding the waste water over a strongly basic ion exchanger, whereupon selenium oxyanions are bound to the ion exchanger.

14. The method for removing mercury and selenium from waste waters as claimed in one of claims 1 to 13, **characterized in that** a flocculating agent, preferably polyacrylamide, is added in step b) and/or step e).

15. The method for removing mercury and selenium from waste waters as claimed in one of claims 1 to 14, **characterized in that** in a step f), a sulphate-containing solution or solid is added to the waste water in order to precipitate out barium sulphate.

16. The method for removing mercury and selenium from waste waters as claimed in one of claims 1 to 15, **characterized in that** the waste water from step e) or step f) is fed via a pump into at least one reverse osmosis membrane module in which the waste water is separated into a permeate with a reduced chloride content and a concentrate with an increased chloride content, and the permeate with a reduced chloride content is recycled to a waste water-producing unit.

## Revendications

1. Procédé permettant d'enlever du mercure et du sélénium présents dans des eaux usées contenant du sulfate, notamment dans des eaux usées issues d'installations de désulfurisation des fumées, consistant à
a) mettre à disposition un volume d'eaux usées V1 qui est contaminé au mercure et au sélénium et dont la concentration en sulfate est connue,
b) ajouter au volume d'eaux usées V1, suite à la mise à disposition dudit volume d'eaux usées, une quantité définie d'ions Ba²⁺ pour ainsi précipiter du BaSO₄,
c) séparer le BaSO₄ ainsi obtenu, pour obtenir des eaux usées à faible teneur à matières solides,
d) faire passer des eaux usées à faible teneur en matières solides sur un échangeur d'ions, pour ainsi obtenir des eaux usées à teneur en mercure réduite, et
e) enlever du sélénium et/ou des composés de sélénium présents dans les eaux usées à teneur en mercure réduite.

2. Procédé permettant d'enlever du mercure et du sélénium présents dans des eaux usées contenant du sulfate selon la revendication 1, **caractérisé en ce que** ladite quantité d'ions Ba²⁺ définie est ajoutée durant une période de temps t définie, dans un nombre n de doses partielles défini, à différents moments t1 à tn définis.

3. Procédé permettant d'enlever du mercure et du sélénium présents dans des eaux usées contenant du sulfate selon la revendication 1, **caractérisé en ce que** ladite quantité d'ions Ba²⁺ définie est ajoutée le long d'un parcours de procédé x défini, dans un nombre n de doses partielles défini, à différentes positions de parcours de procédé x1 à xn définies.

4. Procédé permettant d'enlever du mercure et du sélénium présents dans des eaux usées contenant du sulfate selon les revendications 2 ou 3, **caractérisé en ce que**, suite à l'ajout de 1 à n doses partielles de la quantité d'ions Ba²⁺ définie, on sépare le BaSO₄.

5. Procédé permettant d'enlever du mercure et du sélénium présents dans des eaux usées contenant du sulfate selon les revendications 1 à 4, **caractérisé en ce que**, suite à l'ajout d'une quantité d'ions Ba²⁺ définie ou d'une certaine dose partielle de cette quantité, on ajuste le pH à une valeur comprise entre 11 et 12,5 au moyen d'ions hydroxyde ou de composés formant des ions hydroxyde.

6. Procédé permettant d'enlever du mercure et du sélénium présents dans des eaux usées contenant du sulfate selon la revendication 5, **caractérisé en ce que** le pH est ajusté à une valeur comprise entre 11 et 12,5 en ajoutant une solution appropriée contenant des hydroxydes des groupes 1 et/ou 2 du tableau périodique des éléments.

7. Procédé permettant d'enlever du mercure et du sélénium présents dans des eaux usées contenant du sulfate selon la revendication 5, **caractérisé en ce que** le pH est ajusté à une valeur comprise entre 11 et 12,5 au moyen de Ca(OH)₂.

8. Procédé permettant d'enlever du mercure et du sélénium présents dans des eaux usées contenant du sulfate selon les revendications 1 à 7, **caractérisé en ce qu'**à l'étape e), le sélénium présent dans les eaux usées à teneur en mercure réduite est enlevé
e1) en ajoutant auxdites eaux usées un mélange à base de fer,
e2) en ajustant ensuite le pH à une valeur comprise entre 6 et 8,5, de préférence entre 7,0 et 8,0, et
e3) en séparant du sélénium ou des matières solides contenant du sélénium.

9. Procédé permettant d'enlever du mercure et du sélénium présents dans des eaux usées contenant du sulfate selon la revendication 8, **caractérisé en ce que** l'on ajoute du Fe(0) ainsi que des composés de Fe(II) et de Fe(III) aux eaux usées à teneur en mercure réduite et que l'on ajoute préférentiellement du Fe(0) pulvérulent à la solution.

10. Procédé permettant d'enlever du mercure et du sélénium présents dans des eaux usées contenant du sulfate selon la revendication 9, **caractérisé en ce que** l'on ajoute du Fe(0) ainsi que du FeCl₂ et du FeCl₃ aux eaux usées à teneur en mercure réduite.

11. Procédé permettant d'enlever du mercure et du sélénium présents dans des eaux usées contenant du sulfate selon la revendication 10, **caractérisé en ce que** l'on ajoute une suspension aqueuse de Fe(0) ainsi que du FeCl₂ et du FeCl₃ aux eaux usées à teneur en mercure réduite, leur rapport pondéral étant de 1 : 10 : 10.

12. Procédé permettant d'enlever du mercure et du sélénium présents dans des eaux usées contenant du sulfate selon l'une des revendications 8 à 11, **caractérisé en ce que** le pH est ajusté par l'ajout d'ions hydroxyde ou de composés formant des ions hydroxyde.

13. Procédé permettant d'enlever du mercure et du sélénium présents dans des eaux usées contenant du sulfate selon les revendications 1 à 12, **caractérisé en ce qu'**à l'étape e), le sélénium présent dans les eaux usées à teneur en mercure réduite est enlevé en faisant passer lesdites eaux usées sur un échangeur d'ions à forte basicité, les ions d'oxo-sélénium venant alors se lier à l'échangeur d'ions.

14. Procédé permettant d'enlever du mercure et du sélénium présents dans des eaux usées selon les revendications 1 à 13, **caractérisé en ce qu'**à l'étape b) et/ou e), on ajoute un agent auxiliaire de floculation, s'agissant préférentiellement de polyacrylamide.

15. Procédé permettant d'enlever du mercure et du sélénium présents dans des eaux usées selon les revendications 1 à 14, **caractérisé en ce que**; dans une étape f), on ajoute auxdites eaux usées une solution ou un solide contenant du sulfate, pour ainsi provoquer une précipitation de sulfate de baryum.

16. Procédé permettant d'enlever du mercure et du sélénium présents dans des eaux usées selon les revendications 1 à 15, **caractérisé en ce que** lesdites eaux usées issues de l'étape e) ou étape f) sont transférées à l'aide d'une pompe dans au moins un module membranaire d'osmose inverse dans lequel lesdites eaux usées subissent une séparation en un perméat ayant une teneur en chlorure réduite et en un concentré ayant une teneur en chlorure élevée, pour ensuite recycler le perméat ayant une teneur en chlorure réduite dans une installation dont lesdites eaux usées sont issues.
